# EUROPEAN PATENT SPECIFICATION

(11) **EP 3 680 064 B1**
(45) Date of publication and mention of the grant of the patent: **07.08.2024**
(21) Application number: 20158594.0
(22) Date of filing: 27.05.2015
(51) Int. Cl.: B24C 1/10, A47J 27/00, B24C 3/32

(54) **A COOKING UTENSIL**
KOCHUTENSIL
USTENSILE DE CUISSON

(30) Priority: 23.06.2014 CA 2855060; 23.06.2014 US 201414312402
(43) Date of publication of application: 15.07.2020
(62) Divisional of application: 15169471.8
(73) Proprietor: Les Promotions Atlantiques Inc./ Atlantic Promotions Inc., Longueuil QC J4G 1V6 (CA)
(72) Inventor: FENG, Zhihui, Panyu, Guangzhou, Guangdong (CN); ZHANG, Junbin, MAONSHAN SHATIN NT (HK)
(74) Representative: Cabinet Nony

(56) References cited:
- CN-A- 101 396 229
- CN-A- 103 859 999
- DE-U1- 202012 105 036
- US-A- 5 829 116
- US-A- 6 092 520
- US-A1- 2014 134 360

## Description

### Field:

The present invention relates to utensils and the like. More particularly, the present invention relates to a method of treating a surface of a utensil as well as to a utensil having been treated by the method.

### Background:

Known in the art are cooking vessels or baking vessels which have a non-stick coating to prevent food from sticking to the vessel while the food is heated.

US6092520 discloses a cooking utensil according to preamble of claim 1. CN103859999 discloses a non stick pan.

In order to improve the non-stick performance, manufacturers have developed a wrinkle non-stick coating material. However this process presents numerous drawbacks.

Hence, in light of the aforementioned, there is a need for an improved system which, by virtue of its design and components, would be able to overcome some of the above-discussed prior art concerns.

### Summary of the invention:

The object of the present invention is to provide a device according to claim 1 which, by virtue of its design and components, satisfies some of the above-mentioned needs and is thus an improvement over other related methods known in the prior art.

According to an aspect, the above mentioned object is achieved by method of treating a surface of a utensil, the method comprising:
a) providing a substrate to form a component of the utensil, the substrate having a surface area to be treated; and
b) shot peening the substrate substantially evenly across the surface area with particles, for dimpling the substrate with depressions across the surface area, to reducing adhesion of matter on the treated surface area of the utensil.

In particular embodiments, the shot peening may comprise impacting the particles against the surface area with a density included between about 100 particles/cm³ to about 350 particles/cm³. Moreover, each particle may impact the surface area of the substrate at a velocity ranging between about 10 m/sec. and about 30 m/sec. Moreover, each particle may impact the surface area of the substrate at an impact load ranging between about 4482 PA and about 17237 PA (about 0.65 PSI and about 2.5 PSI).

In particular embodiments, the depressions formed at step (b) have an average depth ranging between about 0.1 mm and about 0.5 mm. Each depression may have a diameter ranging between about 1 mm and about 3 mm.

In particular embodiments, the particles of step (b) comprise a plurality of balls, which may be steel balls. Each ball may have a diameter ranging between about 1 mm and about 4 mm.

In particular embodiments, the method may comprise prior to step (b), cleaning the substrate to remove oxidation from a surface of the substrate. The method may further comprise after step (b):
- sand blasting the surface area of the substrate; and
- coating the surface area with a non-stick coating.

In particular embodiments, the substrate of step (a) is configured to form a vessel of a cooking utensil and the surface area to be treated includes at least a cooking surface of the cooking utensil. The surface area impacted by the shot peening may comprise substantially a first surface of the substrate corresponding substantially to an inner side of the cooking utensil. Moreover, the impacted surface area may further include at least a portion of a second surface of the substrate, opposite to the first surface, corresponding to an outer side of the cooking utensil.

In particular embodiments, the substrate may comprise cast iron, aluminum, aluminum alloy, stainless steel-aluminum, stainless steel, copper, other suitable composite materials, and/or the like.

According to another aspect, there is provided a utensil for handling food, the utensil comprising a treated surface having depressions distributed substantially evenly across said treated surface, the depressions having being formed through a shot peening process.

In particular embodiments, the treated surface comprises at least a contact surface for engaging with the food.

In particular embodiments, the utensil may be a cooking utensil and the treated surface may include at least a cooking surface of the cooking utensil. The cooking utensil may comprise a vessel. The treated surface may include at least an inner surface of the vessel. The treated surface may further include at least a portion of an outer surface of the vessel.

The cooking utensil may be a cooking pan or pot, a baking dish and/or the like.

According to yet another aspect, there is provided a method of treating a surface of a utensil, the method comprising:
a) providing a substrate to form a component of the utensil, the substrate having a surface area to be treated; and
b) shot peening the substrate substantially evenly across the surface area with particles, to form depressions in the substrate across the surface area, for reducing adhesion of matter on the treated surface area of the utensil.

According to yet another aspect, there is provided a cooking utensil comprising a cooking surface, the cooking surface having depressions distributed substantially evenly across the contact surface, said depressions being formed through a shot peening process.

Advantageously, the treated surface is enhanced with a physical anti-adherent effect and surface passivation effect resulting from a strong impact of the particles, which increases the density and strength of the substrate, increasing the rigidity and durability of the resulting utensil, as well as to increase durability of the anti-adherent effect.

Still advantageously, during cooking, liquids are stored in the pit of the depressions forming a film of fluid which cushions the food being cooked. This physical non-stick approach can effectively improve cooking performance by about three times in comparison with a cooking utensil made from a same material but without the passivation treatment. The dimpled surface further reduces loss of nutrients from the food during the cooking process, as well as to reduce friction between the food and the cooking utensil.

Other objects, advantages and features of the present invention will become more apparent upon reading of the following non-restrictive description of preferred embodiments thereof, given for the purpose of exemplification only, with reference to the accompanying drawings.

### Brief description of the drawings:

FIG. 1 is a block diagram showing steps of a method, in accordance with an embodiment.
FIG. 2 is a side plan view of a blank being treated by the method shown in FIG. 1, the blank being shown with a partial cut-away showing a cross-section of the blank, the blank being further shown with shot peening equipment, in accordance with an embodiment.
FIG. 3 is another side plan view of the blank shown in FIG. 2, portions of the blank being shown in an enlarged view.
FIG. 4 shows vessel portions of cooking utensils having been treated in accordance with steps of the method shown in FIG. 1.
FIG. 5 shows cooking utensils having been manufactured in accordance with the method shown in FIG. 1, the cooking utensils being shown with corresponding covers.

### Detailed description:

In the following description, the same numerical references refer to similar elements. The embodiments, geometrical configurations, materials mentioned and/or dimensions shown in the figures or described in the present description are preferred embodiments only, given for exemplification purposes only.

Broadly described, the embodiment described below concerns subjecting a cookware blank with steel balls to impact the surface densely and uniformly at high speed and kinetic energy to produce a homogeneous passivation layer having depressions substantially shaped like meteorite craters. In addition, a non-stick coating is applied in order to achieve the dual effects of both physical and coating non-stick properties.

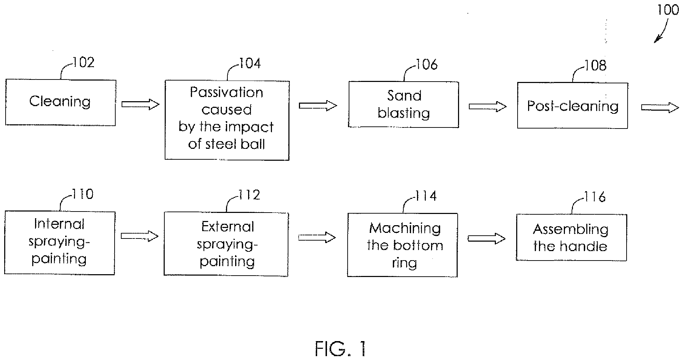

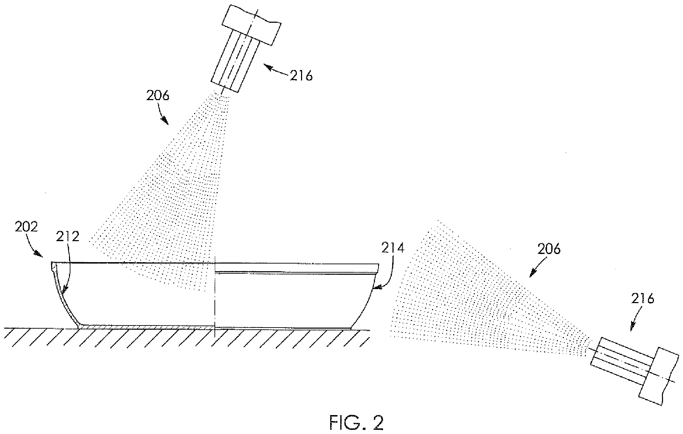

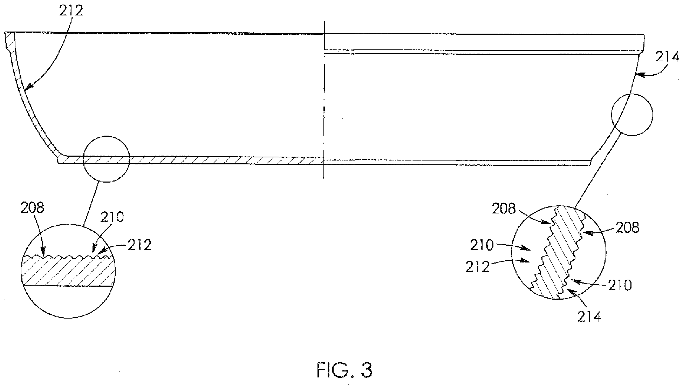

More particularly, with reference to FIG. 1 to 5, there is provided a method **100** of manufacturing a cooking utensil **200.**

A substrate **202** (also referred to herein as "substrate blank" or "blank") is shaped to provide the vessel **204** (or "vessel portion") for the cooking utensil **200.** The vessel typically has a diameter ranging from 12cm to 60cm, with a height of 25cm or less.

A step **102** is directed to cleaning the shaped substrate blank **202** to remove the oil and aluminum alloy metal surface oxidation layer in order to achieve a clean metal molecule surface.

The cleaned and dry blank **202** is then subjected to a shot peening process **104** (also referred to herein as "passivation"). More particularly, the shot peening process involves impacting the blank **202** with stainless and high strength alloy steel balls **206** with a density of 200 particles/cm³ with a final velocity of 21m/sec, providing an impact load of 0.92 N or 8963 PA (1.3 PSI). The balls **206** have a diameter of 2 mm. The shot peening process **104** provides the blank **202** with depressions **208** having a substantially semi-spherical shape. The depressions **208** are distributed substantially homogeneously and substantially densely across the treated surface of the blank forming a concavely and convexed grooved (or "dimpled") surface **210.**

The shot peening process is made by a high pressure jetting equipment line **216** having a double-front and double-back decompression chamber, where the steel balls **206** move densely and uniformly at 360°, and additionally high pressure air flow cause the balls **206** to impact the treated surface evenly.

The depressions **208** on the dimpled surface **210** have an average depth of 0.2 to 0.3 mm and an average diameter ranging between 1 to 1.5 mm. The blank **202** is subjected to the shot peening process on the inner side **212,** and on an exterior side of the blank **214,** for easier cleaning.

It is to be understood in accordance with alternate embodiments that the shot peening process may be applied to only one side of the blank **202** for example, and even to a portion of either side **212, 214** of the blank **202.**

It is to be understood that depending on particular embodiments, the steel ball material may be a high-alloy steel ball (of type YG6, YG6X, YG8, YG8X, YN6, YN9, or the like), a stainless steel ball (of type 440C, 304, 316L, 420, 430, or the like), or a carbon low alloy steel ball (of type A3, Q195, Q235, AIS1010, AISI1015, or the like).

In a subsequent step **106,** the internal surface **210** is sand blasted using 40# to 65# high quality corundum to produce a microcosmic level rough surface of 2 to 4µm in depth, on the dimpled surface **210.** This roughened surface ensures a better adhesion of the non-stick coating, as will be explained further below.

A post-cleaning step **108** cleans the metal wound without any incrustation scale, and includes cleaning agent spraying, hot water spraying, first cold water spraying, second cold water spraying, third cold water spraying, a first negative ion water spraying, a second negative ion water spraying, drying at a temperature of 85 °C and quenching with cool air.

At **110, 112,** a non-stick coating is then sprayed and sintered on the internal and external surfaces **212, 214** of the blank **202.**

At **114,** a ring is machined on a bottom surface of the blank **202.**

At **116,** one or more handle **218** is then assembled onto the blank **202,** to form the cooking utensil **200.** It is to be understood that in alternative embodiments, the handle may be made integrally with the vessel portion of the cooking utensil.

Advantageously, the combined effects of both physical and non-stick coating significantly improves the durability of the anti-adherent performance. Experiments show that under the same conditions, the service life of a cooking utensil made with the above-described method is increased by 3 to 5 times or more in comparison to a cooking utensil without being subjected to the above-described shot peening process. The shot peening process increases the density and strength of the metal surface of the cooking utensil, thereby improving the wear-resistance of the surface by twice or more in comparison to cooking utensils which have not been subjected to the above-described shot peening process.

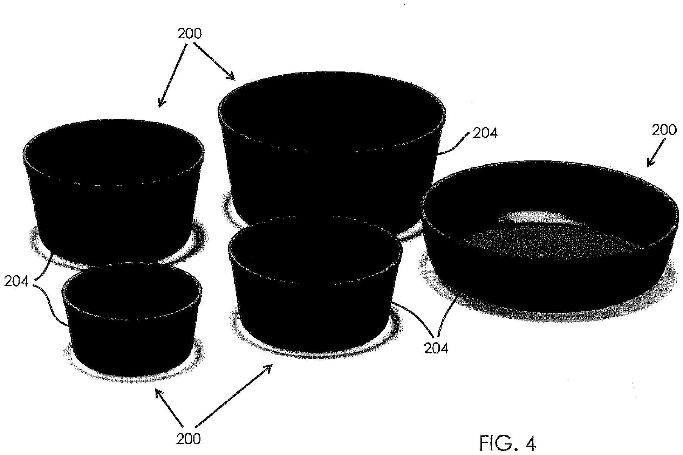

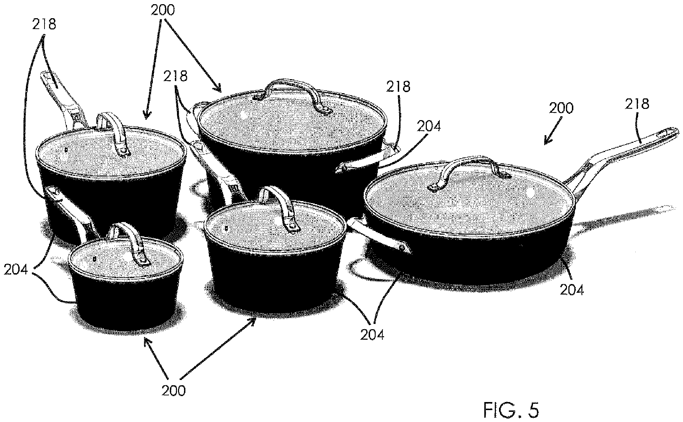

It is to be understood that the cooking utensil may be a cooking pot or pan as illustrated in FIG. 4 and 5, or any suitable cooking, heating or baking dish, as may be easily understood by the person skilled in the art.

Inspection, measurements and tests were conducted as follows.

For the inspection of surface smoothness and roughness, an electronic roughness tester was used in combination with electron microscopy. The measured depth ranged from 0.2 to 0.3 mm; the rounded surface diameter measured ranged from 1 to 1.5 mm, and the roughness measured 2 to 4 µm.

The hardness of the treated surface was measured by an electronic hardness measuring instrument. The resulting hardness measured was HB 32 to 34 (the surface hardness of ordinary 3003 aluminum plate is HB 25 to 27).

To measure the thickness of the non-stick coating, an aluminum plate measuring 10 x 10 x 1.5mm was placed in a cookware. This assembly was subjected to the spray-painting of the non-stick coating material. The aluminum plate was then removed from the cookware for measuring the thickness of the coating by using an electronic film thickness measuring instrument.

A cross-cut peel test was made on the internal and external surface coating, using a cross-cutting device, according to the Standard Hundred Grids Test (QB/T2421-98).

A slat water resistance test was conducted according to the QB/T2421-98 standard.

A dishwasher performance test was conducted according to the EN-12875-1 standard.

An oven test was conducted according to the EN-12983 standard.

An LGA vibration and plane wear test were conducted according to the QB/T2421-98/QB-T242-DuPont standard/ST009- Varberg standard.

A fried egg test was conducted to determine the life span of the cookware. The cookware is heated up to 175 °C, and an egg is placed in the cookware for cooking. The egg is easily separated after being cooked solid. Eggs are thus cooked repeatedly using the same cookware. The test results in a failure when the egg does not separate easily before 300 repetitions are reached. The experimental results show that an egg could be cooked and separated easily from the same cookware having been treated with the above-described shot peening process, 390 times. In contrast, a cookware which was not treated with the shot peening process only achieves 130 repetitions.

Although the above-described embodiment is directed to the manufacturing of a cooking utensil, it is to be understood that embodiments of the present invention may be applied to manufacture civil, commercial and small household electrical kitchenware made from cast iron, aluminum, aluminum alloy, stainless steel-aluminum, stainless steel, copper and other composite materials, by stretching, punching, casting, die casting.

The above-described embodiments are considered in all respect only as illustrative and not restrictive, and the present application is intended to cover any adaptations or variations thereof, as apparent to a person skilled in the art. Of course, numerous other modifications could be made to the above-described embodiments without departing from the scope of the invention, as defined by the claims.

## Claims

1. A cooking utensil (200) with non-stick capability, the cooking utensil (200) comprising:
a cooking vessel (204); and
a handle (218) operatively connected to the cooking vessel (204) for handling the cooking utensil (200);
wherein the cooking vessel (204) includes an inner cooking surface (212) having depressions (208) for receiving therein a cooking liquid;
the cooking utensil (200) being **characterized in that**:
the cooking vessel (204) includes a substrate (202) made of a material selected from the group consisting of cast iron, aluminum, aluminum alloy, stainless steel-aluminum, stainless steel, copper, and composite material;
the inner cooking surface (212) of the cooking vessel (204) is provided with a homogeneous passivation layer produced by shot-peening, and has depressions (208) substantially shaped like meteorite craters;
the depressions (208) have a substantially semi-spherical shape, with an average depth of about 0.1 mm to about 0.5 mm, and an average diameter ranging between about 1 mm to about 3 mm, the depressions (208) having preferably an average depth of about 0.2 mm to about 0.3 mm and an average diameter ranging between about 1 mm to about 1.5 mm;
the homogeneous passivation layer of the cooking vessel (204) has depressions (208) substantially shaped like meteorite craters being further provided on an outer surface (214) of the cooking vessel (204);
the depressions (208) provided about the inner cooking surface (212) of the cooking vessel (204) are positioned, shaped and sized about the cooking surface (210) of the cooking vessel (204) for receiving therein a cooking liquid which forms a fluid film and cushions food being cooked by the cooking utensil (200), thereby providing the cooking utensil (200) with both a physical anti-adherent effect, as well as surface passivation effect; and
an overall resulting hardness of the cooking vessel (204) is between about 32 HB and about 34 HB.

2. The cooking utensil (200) according to claim 1, wherein the depressions (208) are distributed substantially homogeneously and substantially densely across a treated surface of a blank forming a dimpled surface (210) with concavely and convexed grooved sections.

3. The cooking utensil (200) according to claim 1 or 2, wherein the cooking utensil (200) further includes an outer non-stick coating applied to said homogeneous passivation layer in order to provide the cooking utensil (200) with a dual non-stick capability resulting from both physical deformation of the inner cooking surface (212) of the cooking vessel (204) and from the non-stick coating thereof.

4. The cooking utensil (200) according to claim 3, wherein the non-stick coating is sintered onto internal and external surfaces (212,214) of the cooking vessel (204).

5. The cooking utensil (200) according to claim 3 or 4, wherein the cooking vessel (204) includes a sand-blasted surface underlining the outer non-stick coating for ensuring a better adhesion of the non-stick coating; wherein the sand-blasted surface is provided with a microcosmic level rough surface of about 2 µm to about 4 µm in depth; wherein a bottom surface of the cooking vessel (204) is provided with a machined ring; and wherein the cooking utensil (200) is a cooking utensil (200) selected from the group consisting of a cooking pot, a cooking pan, a cooking dish, a heating dish and a baking dish.

## Patentansprüche

1. Kochutensil (200) mit Antihaftfähigkeit, wobei das Kochutensil (200) umfasst:
ein Kochgefäß (204); und
einen Griff (218), der mit dem Kochgefäß (204) zum Handhaben des Kochutensils (200) wirkverbunden ist;
wobei das Kochgefäß (204) eine innere Kochoberfläche (212) mit Vertiefungen (208) zum Aufnehmen einer Kochflüssigkeit darin enthält;
wobei das Kochutensil (200) **dadurch gekennzeichnet ist, dass**
das Kochgefäß (204) ein Substrat (202) enthält, das aus einem Material hergestellt ist, das aus der Gruppe bestehend aus Gusseisen, Aluminium, Aluminiumlegierung, rostfreiem Stahl-Aluminium, rostfreiem Stahl, Kupfer und Verbundmaterial ausgewählt ist;
die innere Kochoberfläche (212) des Kochgefäßes (204) mit einer homogenen, durch Kugelstrahlen hergestellten Passivierungsschicht versehen ist und Vertiefungen (208) aufweist, die im Wesentlichen wie Meteoritenkrater geformt sind;
die Vertiefungen (208) eine im Wesentlichen halbkugelförmige Form aufweisen, mit einer mittleren Tiefe von etwa 0,1 mm bis etwa 0,5 mm und einem mittleren Durchmesser im Bereich zwischen etwa 1 mm und etwa 3 mm, wobei die Vertiefungen (208) vorzugsweise eine mittlere Tiefe von etwa 0,2 mm bis etwa 0,3 mm und einen mittleren Durchmesser im Bereich zwischen etwa 1 mm und etwa 1,5 mm aufweisen;
die homogene Passivierungsschicht des Kochgefäßes (204) Vertiefungen (208) aufweist, die im Wesentlichen wie Meteoritenkrater geformt sind, die ferner auf einer Außenfläche (214) des Kochgefäßes (204) vorgesehen sind;
die um die innere Kochoberfläche (212) des Kochgefäßes (204) vorgesehenen Vertiefungen (208) um die Kochoberfläche (210) des Kochgefäßes (204) herum positioniert, geformt und bemessen sind, um darin eine Kochflüssigkeit aufzunehmen, die einen Flüssigkeitsfilm bildet und Lebensmittel, die durch das Kochutensil (200) gekocht werden, abpuffert, wodurch das Kochutensil (200) sowohl mit einem physikalischen Antihafteffekt als auch mit einem Oberflächenpassivierungseffekt versehen wird; und
eine resultierende Gesamthärte des Kochgefäßes (204) zwischen etwa 32 HB und etwa 34 HB beträgt.

2. Kochutensil (200) nach Anspruch 1, wobei die Vertiefungen (208) im Wesentlichen homogen und im Wesentlichen dicht über eine behandelte Oberfläche eines Rohlings verteilt sind und eine geriffelte Oberfläche (210) mit konkaven und konvexen Rillenabschnitten bilden.

3. Kochutensil (200) nach Anspruch 1 oder 2, wobei das Kochutensil (200) ferner eine äußere Antihaftbeschichtung enthält, die auf die homogene Passivierungsschicht aufgebracht ist, um das Kochutensil (200) mit einer doppelten Antihaftfähigkeit zu versehen, die sich sowohl aus der physikalischen Verformung der inneren Kochoberfläche (212) des Kochgefäßes (204) als auch aus der Antihaftbeschichtung ergibt.

4. Kochutensil (200) nach Anspruch 3, wobei die Antihaftbeschichtung auf Innen- und Außenflächen (212, 214) des Kochgefäßes (204) aufgesintert ist.

5. Kochutensil (200) nach Anspruch 3 oder 4, wobei das Kochgefäß (204) eine sandgestrahlte Oberfläche enthält, die unter der äußeren Antihaftbeschichtung liegt, um eine bessere Bindung der Antihaftbeschichtung zu gewährleisten; wobei die sandgestrahlte Oberfläche mit einer mikroskopischen, rauen Oberfläche von etwa 2 um bis etwa 4 um Tiefe versehen ist; wobei eine Bodenfläche des Kochgefäßes (204) mit einem bearbeiteten Ring versehen ist; und wobei das Kochutensil (200) ein aus der Gruppe ausgewähltes Kochutensil (200) ist, die aus einem Kochtopf, einer Kochpfanne, einer Kochschale, einer Heizschale und einer Backschale besteht.

## Revendications

1. Ustensile de cuisson (200) avec capacité antiadhésive, l'ustensile de cuisson (200) comprenant :
un récipient de cuisson (204) ; et
une poignée (218) fonctionnellement reliée au récipient de cuisson (204) pour manipuler l'ustensile de cuisson (200) ;
dans lequel le récipient de cuisson (204) inclut une surface de cuisson intérieure (212) ayant des creux (208) pour recevoir dans ceux-ci un liquide de cuisson ;
l'ustensile de cuisson (200) étant **caractérisé en ce que** :
le récipient de cuisson (204) inclut un substrat (202) fait d'un matériau sélectionné parmi le groupe constitué de fonte, d'aluminium, d'alliage d'aluminium, d'acier inoxydable--aluminium, d'acier inoxydable, de cuivre, et de matériau composite ;
la surface de cuisson intérieure (212) du récipient de cuisson (204) est pourvue d'une couche de passivation homogène produite par grenaillage, et a des creux (208) sensiblement façonnés comme des cratères de météorite ;
les creux (208) ont un façonnage sensiblement hémisphérique, avec une profondeur moyenne d'environ 0,1 mm à environ 0,5 mm, et un diamètre moyen variant entre environ 1 mm et environ 3 mm, les creux (208) ayant de préférence une profondeur moyenne d'environ 0,2 mm à environ 0,3 mm et un diamètre moyen variant entre environ 1 mm et environ 1,5 mm ;
la couche de passivation homogène du récipient de cuisson (204) a des creux (208) sensiblement façonnés comme des cratères de météorite étant en outre prévus sur une surface extérieure (214) du récipient de cuisson (204) ;
les creux (208) prévus sur la surface de cuisson intérieure (212) du récipient de cuisson (204) sont positionnés, façonnés et dimensionnés dans la surface de cuisson (210) du récipient de cuisson (204) pour recevoir dans ceux-ci un liquide de cuisson qui forme un film de fluide et couvre un aliment en train d'être cuit par l'ustensile de cuisson (200), ainsi fournissant à l'ustensile de cuisson (200) à la fois un effet antiadhésif physique, ainsi qu'un effet de passivation de surface ; et
une dureté résultante totale du récipient de cuisson (204) est entre environ 32 HB et environ 34 HB.

2. Ustensile de cuisson (200) selon la revendication 1, dans lequel les creux (208) sont distribués de façon sensiblement homogène et de façon sensiblement dense sur la totalité d'une surface traitée d'une pièce brute, formant une surface alvéolée (210) avec des sections rainurées de façons concave et convexe.

3. Ustensile de cuisson (200) selon la revendication 1 ou 2, dans lequel l'ustensile de cuisson (200) inclut en outre un revêtement antiadhésif extérieur appliqué sur ladite couche de passivation homogène afin de fournir à l'ustensile de cuisson (200) une double capacité antiadhésive résultant à la fois d'une déformation physique de la surface de cuisson intérieure (212) du récipient de cuisson (204) et du revêtement antiadhésif de celui-ci.

4. Ustensile de cuisson (200) selon la revendication 3, dans lequel le revêtement antiadhésif est fritté sur des surfaces interne et externe (212, 214) du récipient de cuisson (204).

5. Ustensile de cuisson (200) selon la revendication 3 ou 4, dans lequel le récipient de cuisson (204) inclut une surface sablée se trouvant sous le revêtement antiadhésif extérieur pour garantir une meilleure adhésion du revêtement antiadhésif ; dans lequel la surface sablée est pourvue d'une surface rugueuse de niveau microscopique d'environ 2 µm à environ 4 µm de profondeur ; dans lequel une surface inférieure du récipient de cuisson (204) est pourvue d'un anneau usiné ; et dans lequel l'ustensile de cuisson (200) est un ustensile de cuisson (200) sélectionné parmi le groupe constitué d'un pot de cuisson, d'une casserole de cuisson, d'un plat de cuisson, d'un plat chauffant et d'un plat de cuisson au four.
